# EUROPEAN PATENT SPECIFICATION

(11) **EP 2 627 037 B1**
(45) Date of publication and mention of the grant of the patent: **09.08.2017**
(21) Application number: 12803740.5
(22) Date of filing: 25.06.2012
(51) Int. Cl.: H04L 12/869, H04L 12/863, H04L 12/42, H04L 12/437, H04L 12/723

(54) **NETWORK CONFIGURATION METHOD**
NETZWERKKONFIGURATIONSVERFAHREN
PROCÉDÉ DE CONFIGURATION DE RÉSEAU

(30) Priority: 25.06.2011 CN 201110174702
(43) Date of publication of application: 14.08.2013
(73) Proprietor: Huawei Technologies Co., Ltd., Longgang District Shenzhen, Guangdong 518129 (CN)
(72) Inventor: SUN, Guanghui, Shenzhen Guangdong 518129 (CN); XU, Qianfeng, Shenzhen Guangdong 518129 (CN); WANG, Jiafan, Shenzhen Guangdong 518129 (CN); HUANG, Aidi, Shenzhen Guangdong 518129 (CN); OUYANG, Wanru, Shenzhen Guangdong 518129 (CN)
(74) Representative: Epping - Hermann - Fischer
(86) International application number: PCT/CN2012/077459
(87) International publication number: WO 2013/000384

(56) References cited:
- CN-A- 1 756 222
- CN-A- 102 035 712
- CN-A- 102 387 027
- ANDERSSON L ET AL: "LDP Specification; rfc5036.txt", 20071001, 1 October 2007 (2007-10-01), XP015055108, ISSN: 0000-0003
- ROSEN CISCO SYSTEMS E ET AL: "Multiprotocol Label Switching Architecture; rfc3031.txt", 20010101, 1 January 2001 (2001-01-01), XP015008814, ISSN: 0000-0003

## Description

### TECHNICAL FIELD

The present invention relates to the field of communications, and in particular, to a network configuration method.

### BACKGROUND

Multi-protocol label switching (MPLS) is a system used for rapid data packet switching and routing, and provides capabilities such as targeting, routing, forwarding, and switching for network data traffic. More particularly, the MPLS has a mechanism of managing communication streams of different forms. The MPLS is independent of layer 2 and layer 3 protocols, such as, an asynchronous transfer mode (ATM) and an IP. The MPLS provides a manner for mapping an IP address to a simple label having a fixed length and used for different packet forwarding and packet switching technologies. The MPLS is an interface of an existing routing and switching protocol, such as an IP, an ATM, a frame relay, a resource reservation protocol (RSVP), and open shortest path first (OSPF).

In the MPLS, data transmission occurs on a label switched path (LSP). The LSP is a label sequence of each node along a path from a source end to a terminal. Some label distribution protocols are currently used, such as a label distribution protocol (LDP), an RSVP, or some protocols established on a routing protocol, such as a border gateway protocol (BGP). A label having a fixed length is inserted at the beginning of each packet or cell, and may be used by hardware to rapidly switch a packet between two links, making it possible to rapidly switch data. In the prior art, when an MPLS technology is used to implement a ring network, each node on a ring performs forwarding for each service, and the node on the ring needs to perform different forwarding policies for each service. Because the number of entry services is usually large, a lot of processing pressure is brought to each node on the ring.

Internet standard "Multiprotocol Label Switching Architecture" (RFC 3031, January 2001) discloses the architecture for Multiprotocol Label Switching (MPLS). Specifically, it discloses discloses setting up an LSP between ingress and egress node via intermediate nodes called LSR, wherein the LSP is associated with a FEC specifying which packets are "mapped" to that LSP. FEC is a term used in MPLS to describe a set of packets with similar and/or identical characteristics which may be forwarded the same way, that is, this set of packets may be bound to the same MPLS label.

Furthermore, Internet standard "LDP Specification" (RFC 5036, October 2007) discloses a set of procedures, called a Label Distribution Protocol (LDP) by which Label Switching Routers (LSRs) distribute labels to support MPLS forwarding along normally routed paths. Specifically, it discloses setting up a LSP towards an egress node, allocating a label to the egress node using MPLS, this label is then mapped to a new label which is reported to the upstream node.

### Summary

In the following description the term "embodiment" is to be interpreted as an example, whereas the scope of protection is only defined by the subject matter of the appended claims. By adopting the foregoing technical solutions, each node on a ring is a forward chain working channel leaving node (FCWC_LN), a forward chain working channel is established for each FCWC_LN, and a service on the ring is encapsulated with a WC_LSP label when being forwarded and reaches a leaving node through a corresponding forward chain working channel. Therefore, a node on the ring does not need to perform different forwarding polices for services of different entry nodes, thereby greatly reducing a processing burden.

### Brief description of drawings

FIG. 1 is a flow chart of a method according to an embodiment of the present invention;
FIG. 2 is a structural diagram of a network according to an embodiment of the present invention;
FIG. 3 is a flow chart of a method according to an embodiment of the present invention;
FIG. 4 is a flow chart of a method according to an embodiment of the present invention;
FIG. 5 is a structural diagram of a network according to an embodiment of the present invention;
FIG. 6 is a structural diagram of a network according to an embodiment of the present invention;
FIG. 7 is a structural diagram of a network according to an embodiment of the present invention;
FIG. 8 is a structural diagram of a network according to an embodiment of the present invention;
FIG. 9 is a structural diagram of a device according to an embodiment of the present invention;
FIG. 10 is a structural diagram of a network according to an embodiment of the present invention;
FIG. 11 is a structural diagram of a device according to an embodiment of the present invention; and
FIG. 12 is a structural diagram of a device according to an embodiment of the present invention.

### DESCRIPTION OF EMBODIMENTS

The present invention is described in detail in the following with reference to the accompanying drawings and specific embodiments. However, it should be noted that, the following embodiments are merely examples taken for ease of understanding the technical solutions and are not intended to limit the present invention.

### Embodiment 1

An embodiment of the present invention discloses a network configuration method. The network configuration method is applied in a ring including n nodes, where n≥2 and n is a natural number. Optionally, n is 2, 3, 4, 5, 6, 7, 8, 10, or 20.

The network configuration method includes the following content.

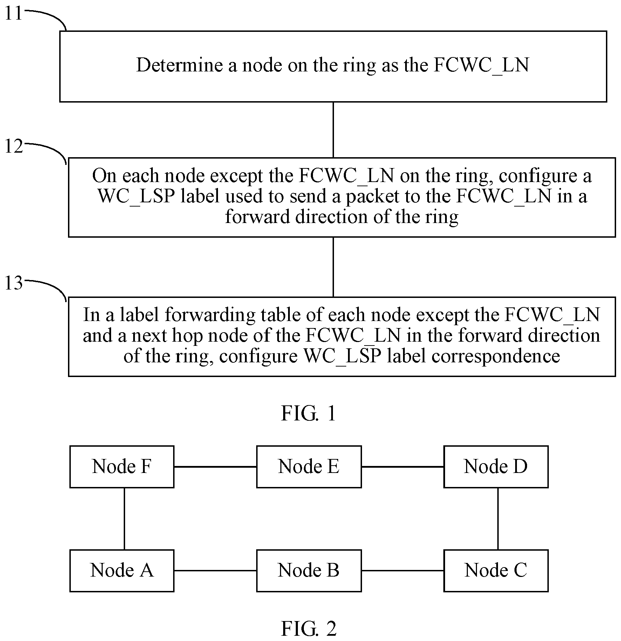

A forward chain working channel is established for each forward chain working channel leaving node FCWC_LN (Forward Chain Working Channel _ Leaving Node) by taking each node on the ring as a FCWC_LN. As shown in FIG. 1, the establishing each forward chain working channel includes:
11: Determine a node on the ring as the FCWC_LN.
12: On each node except the FCWC_LN on the ring, configure a working channel label switched path label (WC_LSP label, Working Channel_LSP label) used to send a packet to the FCWC_LN in a forward direction of the ring, where the WC_LSP label configured on each node except the FCWC_LN is allocated by a next hop node of each node except the FCWC_LN in the forward direction of the ring to each node except the FCWC_LN.
13: In a label forwarding table of each node except the FCWC_LN and a next hop node of the FCWC_LN in the forward direction of the ring, configure working channel label switched path label (WC_LSP label, Working Channel_LSP label) correspondence, where each node except the FCWC_LN and the next hop node of the FCWC_LN in the forward direction of the ring is an intermediate node of the forward chain working channel, and the WC_LSP label correspondence is correspondence between a WC_LSP label allocated by a next hop node of each intermediate node of the forward chain working channel in the forward direction of the ring to each intermediate node of the forward chain working channel and a WC_LSP label allocated by each intermediate node of the forward chain working channel to a previous hop node of each intermediate node of the forward chain working channel in the forward direction of the ring.

Optionally, the method further includes:
determining, by a node on the ring, a FCWC_LN of an entry packet after receiving the entry packet;
determining a WC_LSP label for the entry packet according to the FCWC_LN of the entry packet; and
pushing (push) the determined WC_LSP label into the entry packet and performing packet forwarding.

After a forward chain working channel is established by taking a first node on the ring as a FCWC_LN according to the foregoing method, a process of forwarding a packet, taking the first node as the FCWC_LN, on the ring is described as follows.

When a first packet taking the first node as a FCWC_LN enters from any node except the first node on the ring, a node receiving the first packet determines, according to configuration information in the current node, that the FCWC_LN of the first packet is the first node. Then, the node receiving the first packet encapsulates the first packet by using a WC_LSP label configured on the current node and used to send a packet to the FCWC_LN in the forward direction of the ring, that is, a WC_LSP label is pushed into the first packet taken as an entry packet and the first packet is sent to a next hop node in the forward direction of the ring.

Optionally, the next hop node performs leaving processing on the first packet after determining that the next hop node itself is the FCWC_LN of the first packet.

Preferably, the next hop node queries a label forwarding table of the next hop node according to the WC_LSP label in the first packet and determines whether the next hop node itself is the FCWC_LN of the first packet.

Optionally, when the next hop node determines that the next hop node itself is an intermediate node of the forward chain working channel, the next hop node forwards the first packet along the forward chain working channel.

Preferably, the next hop node queries the label forwarding table of the next hop node according to the WC_LSP label in the first packet, obtains working channel intermediate node label correspondence corresponding to the WC_LSP label in the first packet, and further determines a new WC_LSP label required by the next hop node to send the first packet to the FCWC_LN in the forward direction of the ring. The next hop node switches a working label to the new WC_LSP label, and sends the first packet to a new next hop node in the forward direction of the ring.

The new next hop node continuously queries a label forwarding table of the new next hop node according to a current WC_LSP label in the first packet, when determining that the new next hop node itself is the FCWC_LN, performs a leaving operation, and when determining that the new next hop node itself is another intermediate node of the forward chain working channel, uses another new WC_LSP label obtained according to the label forwarding table of the new next hop node, and continuously forwards the first packet in the forward direction of the ring until the first packet is sent to the FCWC_LN.

In this embodiment, a forward chain working channel is established by taking each node on a ring as a FCWC_LN according to the foregoing method. Therefore, a packet that enters from any node on the ring and requests to leave from any node except an entry node of the packet may leave through a forward chain working channel taking a leaving node of the packet as a FCWC_LN. A node on the ring does not need to perform different forwarding polices for services of different entry nodes.

For example, according to the configuration method in this embodiment, for a ring shown in FIG. 2, a forward chain working channel needs to be established for each leaving node by taking each node in nodes A to F as a leaving node.

When a node D is determined as a FCWC_LN, a WC_LSP label used to send a packet to the node D in a forward direction of the ring is configured for each node except the node D on the ring shown in FIG. 2, that is, a node A, a node B, a node C, a node E, and a node F, where the WC_LSP label configured on each node is allocated by a next hop node of each node in the forward direction of the ring to each node.

For example, LSP label_D_D configured in a label forwarding table of the node E and used to send a packet to the node D in the forward direction of the ring is allocated by the node D to the node E, LSP label_E_D configured in a label forwarding table of the node F and used to send a packet to the node D in the forward direction of the ring is allocated by the node E to the node F, LSP label_F_D configured in a label forwarding table of the node A and used to send a packet to the node D in the forward direction of the ring is allocated by the node F to the node A, LSP label_A_D configured in a label forwarding table of the node B and used to send a packet to the node D in the forward direction of the ring is allocated by the node A to the node B, and LSP label_B_D configured in a label forwarding table of the node C and used to send a packet to the node D in the forward direction of the ring is allocated by the node B to the node C. Furthermore, in the network shown in FIG. 2, when the node D is a FCWC_LN, and the forward direction is a clockwise direction, the node E, the node F, the node A, and the node B are intermediate nodes of the forward chain working channel. The node C is an ingress node of a forward chain working channel taking the node D as a FCWC_LN and is not the intermediate node, and the node D is the FCWC_LN and is not the intermediate node.

In this way, correspondence between LSP label_D_D and LSP label_E_D is configured in the label forwarding table of the node E, correspondence between LSP label_E_D and LSP label_F_D is configured in the label forwarding table of the node F, correspondence between LSP label_F_D and LSP label_A_D is configured in the label forwarding table of the node A, and correspondence between LSP label_A_D and LSP label_B_D is configured in the label forwarding table of the node B. The node C is not the intermediate node, but LSP label_B_D allocated by the node B to the node C and used to send a packet to the node D in the forward direction of the ring is configured in the label forwarding table of the node C.

After the foregoing configuration, a forward chain working channel taking the node D as a FCWC_LN is established.

When a packet A that needs to leave from the node D enters from the node A, the node A determines, according to configuration information in the current node, a leaving node of the packet A is the node D, that is, a FCWC_LN of the packet A is the node D, and the node A encapsulates the packet A by using LSP label_F_D configured in a label forwarding table entry of the node A and used to send a packet to the FCWC_LN in the forward direction of the ring, and sends the packet A to the node F, where the forward direction is the clockwise direction. The node F receives the packet A, queries the label forwarding table of the node F according to LSP label_F_D in the packet A, determines LSP label_E_D required to continuously forward the packet A, then replaces LSP label_F_D in the packet A with LSP label_E_D, and sends the packet A to the node E.

The node E receives the packet A, queries the label forwarding table of the node E according to LSP label_E_D in the packet A, determines LSP label_D_D required to continuously forward the packet A, then replaces LSP label_E_D in the packet A with LSP label_D_D, and sends the packet A to the node D.

The node D receives the packet A, queries the label forwarding table according to LSP label_D_D carried in the packet A, then determines that the node D is a leaving node, and performs leaving processing on the packet A.

Furthermore, according to a method for establishing a forward chain working channel by taking the node D as a FCWC_LN, five forward chain working channels are established by taking the node A, the node B, the node C, the node E, and the node F as FCWC_LNs respectively. The six forward chain working channels work at the same time, so that a packet taking any node on the ring as a leaving node can be sent to a corresponding leaving node.

Optionally, in this embodiment, based on the multiple established forward chain working channels, a method for establishing multiple reverse chain protecting channels on the ring is further included.

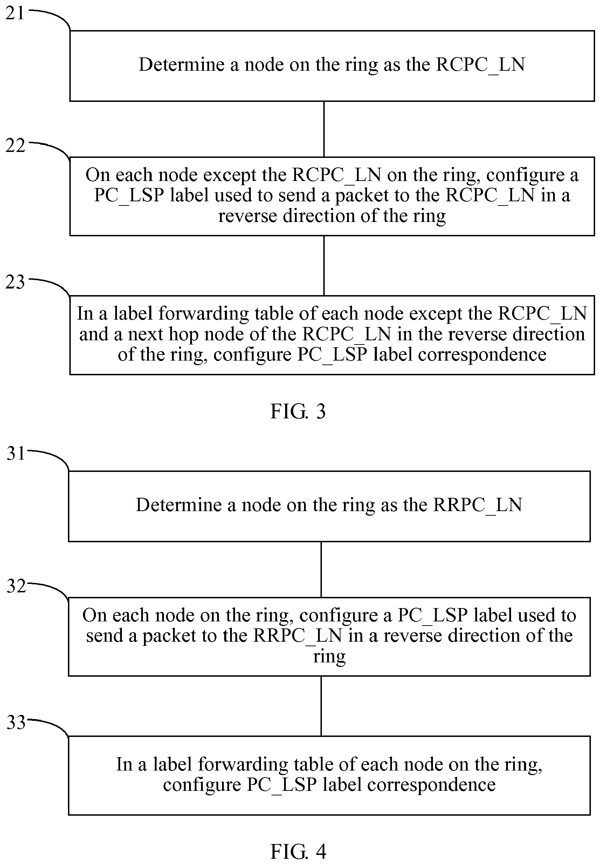

A reverse chain protecting channel is established for each reverse chain protecting channel leaving node RCPC_LN (Reverse Chain Protecting Channel_Leaving Node) by taking each node on the ring as an RCPC_LN. As shown in FIG. 3, the establishing each reverse chain protecting channel includes:
21: Determine a node on the ring as the RCPC_LN.
22: On each node except the RCPC_LN on the ring, configure a protecting channel label switched path label (PC_LSP label, Protecting Channel_LSP label) used to send a packet to the RCPC_LN in a reverse direction of the ring, where the PC_LSP label configured on each node except the RCPC_LN is allocated by a next hop node of each node except the RCPC_LN in the reverse direction of the ring to each node except the RCPC_LN.
23: In a label forwarding table of each node except the RCPC_LN and a next hop node of the RCPC_LN in the reverse direction of the ring, configure protecting channel label switched path label PC_LSP label correspondence, where a node except the RCPC_LN and the next hop node of the RCPC_LN in the reverse direction of the ring is an intermediate node of the reverse chain protecting channel, and the PC_LSP label correspondence is correspondence between a PC_LSP label allocated by a next hop node of each intermediate node of the reverse chain protecting channel in the reverse direction of the ring to each intermediate node of the reverse chain protecting channel and a PC_LSP label allocated by each intermediate node of the reverse chain protecting channel to a previous hop node of each intermediate node of the reverse chain protecting channel in the reverse direction of the ring.

In this way, for any node on the ring, a forward chain working channel taking the node as a FCWC_LN exists, and a reverse chain protecting channel taking the node as an RCPC_LN also exists.

Optionally, in each node on the ring, channel switching label correspondence is configured, where the channel switching label correspondence is correspondence between the WC_LSP label and the PC_LSP label, and a forward chain working channel corresponding to a WC_LSP label in channel switching label correspondence has a same leaving node as a reverse chain protecting channel corresponding to a PC_LSP label in the same channel switching label correspondence. When needing to switch a packet from a forward chain working channel to a reverse chain protecting channel having a same leaving node, a node queries the channel switching label correspondence according to a WC_LSP label carried in the packet, and determines a WC_LSP label used to enable the packet to be transmitted in the reverse chain protecting channel having the same leaving node, so as to send the packet to the leaving node through the reverse chain protecting channel by using a reverse chain protecting channel label.

Optionally, a method for protecting a packet by using a reverse chain protecting channel according to the channel switching label correspondence is as follows.

Two nodes on the ring determine that a link fault occurs between the two nodes, where one of the two nodes is a local node of a faulty link, and the other one is a peer node of the faulty link.

The local node of the faulty link receives, through a forward chain working channel, a to-be-forwarded packet that needs to pass through the faulty link.

The local node of the faulty link determines, according to a WC_LSP label of the to-be-forwarded packet and the channel switching label correspondence, a PC_LSP label for the to-be-forwarded packet.

By using the determined PC_LSP label, the local node of the faulty link sends, along a reverse chain protecting channel corresponding to the determined PC_LSP label, the to-be-forwarded packet to a leaving node of the to-be-forwarded packet.

For example, in the network shown in FIG. 2, a forward chain working channel taking the node D as a FCWC_LN and a reverse chain protecting channel taking the node D as an RCPC_LN exist, where the forward direction is a clockwise direction and the reverse direction is an anticlockwise direction. When a fault occurs in a link between the node F and the node E, a packet that enters from the node A and needs to leave from the node D cannot reach the node D through the forward chain working channel. After determining that the link is faulty, the node F switches a packet that is received by the node F and needs to leave from the node D to the reverse chain protecting channel taking the node D as an RCPC_LN, and sends, through the reverse chain protecting channel taking the node D as an RCPC_LN, the packet that needs to leave from the node D to the node D, so that the node D performs corresponding leaving processing.

Preferably, channel switching label correspondence between a WC_LSP label of the forward chain working channel taking the node D as a FCWC_LN and a PC_LSP label of the reverse chain protecting channel taking the node D as an RCPC_LN is configured in the node F. The node F queries the channel switching label correspondence according to a WC_LSP label carried in the packet and used to enable the packet to be transmitted in the forward chain working channel taking the node D as a FCWC_LN, and determines a corresponding PC_LSP label, so as to send the packet to the leaving node through the reverse chain protecting channel by using the corresponding PC_LSP label.

Optionally, in the embodiment, based on the multiple established forward chain protecting channels, a method for establishing multiple reverse ring protecting channels on the ring may be further included.

A reverse ring protecting channel is established for each reverse ring protecting channel leaving node (RRPC_LN, Reverse Ring Protecting Channel_Leaving Node) by taking each node on the ring as an RRPC_LN. As shown in FIG. 4, the establishing each reverse ring protecting channel includes:
31: Determine a node on the ring as the RRPC_LN.
32: On each node on the ring, configure a PC_LSP label used to send a packet to the RRPC_LN in a reverse direction of the ring, where the PC_LSP label configured on each node of the ring is allocated by a next hop node of each node on the ring in the reverse direction of the ring to each node on the ring.
33: In a label forwarding table of each node on the ring, configure protecting channel label switched path label PC_LSP label correspondence, where the PC_LSP label correspondence is correspondence between a PC_LSP label allocated by the next hop node of each node on the ring in the reverse direction of the ring to each node on the ring and used to send a packet to the RRPC_LN in the reverse direction of the ring and a PC_LSP label allocated by each node on the ring to a previous hop node of each node on the ring in the reverse direction of the ring and used to send a packet to the RRPC_LN in the reverse direction of the ring.

In this way, for any node on the ring, a forward chain working channel taking the node as a FCWC_LN exists, and a reverse ring protecting channel taking the node as an RRPC_LN also exists.

Optionally, in each node on the ring, channel switching label correspondence is configured, where the channel switching label correspondence is correspondence between the WC_LSP label and the PC_LSP label, and a forward chain working channel corresponding to a WC_LSP label in channel switching label correspondence has a same leaving node as a reverse ring protecting channel corresponding to a PC_LSP label in the same channel switching label correspondence. Optionally, a method for protecting a packet by using a reverse ring protecting channel according to the channel switching label correspondence is as follows.

Two nodes on the ring determine that a link fault occurs between the two nodes, where one of the two nodes is a local node of a faulty link, and the other one is a peer node of the faulty link.

The local node of the faulty link receives, through a forward chain working channel, a to-be-forwarded packet that needs to pass through the faulty link.

The local node of the faulty link determines, according to a WC_LSP label of the to-be-forwarded packet and channel switching label correspondence in the local node of the faulty link, a PC_LSP label for the to-be-forwarded packet.

By using the determined PC_LSP label, the local node of the faulty link sends, along a reverse ring protecting channel corresponding to the determined PC_LSP label, the to-be-forwarded packet to the peer node of the faulty link.

The peer node of the faulty link determines, according to the PC_LSP label in the to-be-forwarded packet and channel switching label correspondence in the peer node of the faulty link, a WC_LSP label for the to-be-forwarded packet, and sends, along the forward chain working channel, the to-be-forwarded packet to a leaving node of the to-be-forwarded packet.

It should be noted that, when the packet reaches the RRPC_LN through the reverse ring protecting channel, a leaving operation is not performed, but the packet is sent to the peer node of the faulty link.

For example, in the network shown in FIG. 2, a forward chain working channel taking the node D as a FCWC_LN and a reverse ring protecting channel taking the node D as an RRPC_LN exist, where the forward direction is a clockwise direction and the reverse direction is an anticlockwise direction. When a fault occurs in a link between the node F and the node E, a packet that enters from the node A and needs to leave from the node D cannot reach the node D through the forward chain working channel. After determining that the link is faulty, the node F, that is, a local node of the faulty link, switches a packet that is received by the node F and needs to leave from the node D to the reverse ring protecting channel taking the node D as an RRPC_LN, and sends, through the reverse ring protecting channel taking the node D as an RRPC_LN, the packet that needs to leave from the node D to the node E, that is, a peer node of the faulty link. The node E further switches the packet back to the forward chain working channel taking the node D as a FCWC_LN, and sends the packet to the node D through the forward chain working channel taking the node D as a FCWC_LN, so that the node D performs leaving processing on the packet.

Preferably, channel switching label correspondence between a WC_LSP label taking the node D as a FCWC_LN and a PC_LSP label taking the node D as an RRPC_LN is configured in the node F. The node F queries the channel switching label correspondence according to a WC_LSP label carried in the packet, determines a corresponding PC_LSP label, and sends the packet to the node E through the reverse ring protecting channel by using the corresponding PC_LSP label. The channel switching label correspondence between the WC_LSP label taking the node D as a FCWC_LN and the PC_LSP label taking the node D as an RRPC_LN is also configured in the node E. The node E queries the channel switching label correspondence according to a PC_LSP label carried in the packet and used to enable the packet to be transmitted in the reverse ring protecting channel taking the node D as an RRPC_LN, determines a corresponding WC_LSP label, and sends the packet to the node D by using the corresponding WC_LSP label, so that the node D performs leaving processing on the packet.

### Embodiment 2

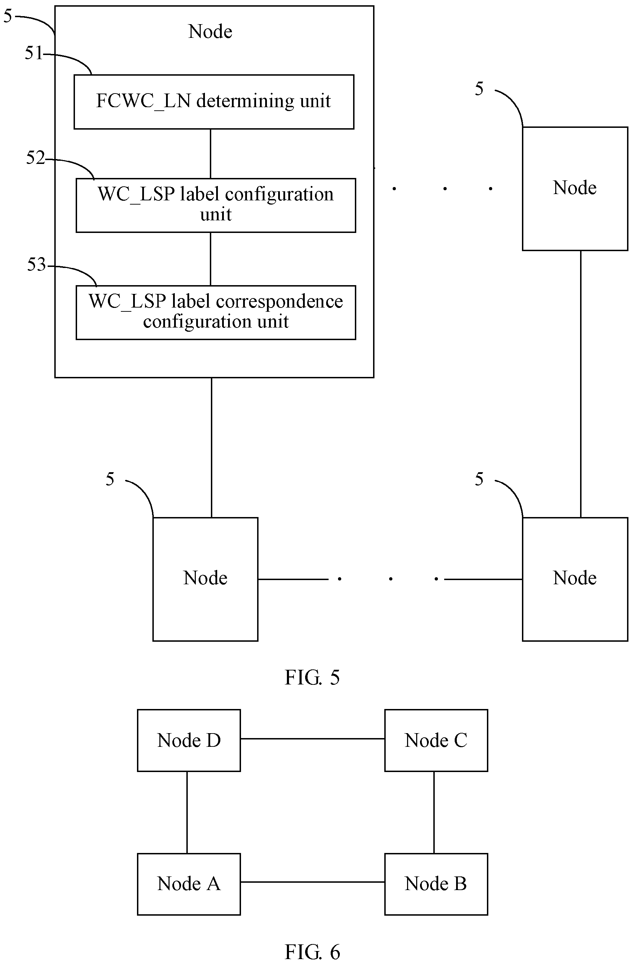

As shown in FIG. 5, an embodiment of the present invention discloses a ring network system, where the ring network system includes n nodes 5, where n≥2 and n is a natural number. Optionally, the node 5 is a switch or a router.

Each node in the ring network system includes a forward chain working channel leaving node (FCWC_LN) determining unit 51, a working channel label switched path label (WC_LSP label) configuration unit 52, and a working channel label switched path label (WC_LSP label) correspondence configuration unit 53.

The FCWC_LN determining unit 51 is configured to determine a first group of FCWC_LNs, where the first group of FCWC_LNs includes other nodes except the current node on a ring.

The WC_LSP label configuration unit 52 is configured to: on the current node, configure, by taking each node in the first group of FCWC_LNs as a leaving node, a WC_LSP label used to send a packet to each node in the first group of FCWC_LNs, where each WC_LSP label is allocated by a next hop node of the current node in a forward direction of the ring to the current node, each WC_LSP label corresponds to a leaving node, and different WC_LSP labels correspond to different leaving nodes respectively.

The WC_LSP label correspondence configuration unit 53 is configured to: on the current node, configure, by taking each node in a second group of FCWC_LNs as a leaving node, WC_LSP label correspondence, where WC_LSP label correspondence taking a node i in the second group of FCWC_LNs as a leaving node includes correspondence between a WC_LSP label configured in the current node and used to send a packet to the node i and a WC_LSP label allocated by the current node to a previous hop node of the current node in the forward direction of the ring and used to send a packet to the node i, the second group of FCWC_LNs is other nodes except the previous hop node of the current node in the forward direction of the ring in the first group of FCWC_LNs, and the node i is any node in the second group of FCWC_LNs.

The WC_LSP label is a label used to send a packet to a leaving node of the packet in the forward direction of the ring or along the forward chain working channel.

In this embodiment, the forward direction is clockwise or anticlockwise.

Optionally, in this embodiment, each node may include an entry packet processing unit. The entry packet processing unit is configured to determine a FCWC_LN of an entry packet after a node where the entry packet processing unit is located receives the entry packet, determine a WC_LSP label for the entry packet according to the FCWC_LN of the entry packet, and push (push) the determined WC_LSP label into the entry packet and perform packet forwarding. Because a WC_LSP label to any other node on the ring is configured in each node in the ring network system, after receiving an entry packet, any node in the ring network may encapsulate the entry packet by using a WC_LSP label corresponding to the entry packet, that is, push a corresponding WC_LSP label into the entry packet, and then send the entry packet encapsulated with the WC_LSP label to a leaving node of the entry packet. In addition, the WC_LSP label correspondence is configured in each node in the ring network; therefore, when receiving a packet sent by another node on the ring to a node, the node may determine a new WC_LSP label according to a WC_LSP label carried in the packet and the WC_LSP label correspondence, switch a working label to the new WC_LSP label, and continuously send the packet to a leaving node of the packet.

In the ring network in this embodiment, each node in the n nodes includes the forward chain working channel leaving node FCWC_LN determining unit, the working channel label switched path label (WC_LSP label) configuration unit, and the working channel label switched path label (WC_LSP label) correspondence configuration unit. In this way, in the ring network, n forward chain working channels are generated, an egress node of each forward chain working channel is a node in the ring network, and egress nodes of any two forward chain working channels are different. The n forward chain working channels are combined together, to ensure that a packet that needs to leave from any node on the ring can be forwarded to a corresponding leaving node, and a node on the ring does not need to perform different forwarding polices for services of different entry nodes.

A ring network system shown in FIG. 6 includes a node A, a node B, a node C, and a node D. Each of the node A, the node B, the node C, and the node D includes a FCWC_LN determining unit, a WC_LSP label configuration unit, and a WC_LSP label correspondence configuration unit.

The node A is taken as an example, and each unit in the node A performs the following operations.

The FCWC_LN determining unit in the node A determines a first group of FCWC_LNs, where the first group of FCWC_LNs includes other nodes except the current node on a ring.

That is to say, the FCWC_LN determining unit in the node A determines the node B, the node C, and the node D as the first group of FCWC_LNs.

On the current node, the WC_LSP label configuration unit in the node A configures, by taking each node in the first group of FCWC_LNs as a leaving node, a WC_LSP label used to send a packet to each node in the first group of FCWC_LNs, where each WC_LSP label is allocated by a next hop node of the current node in a forward direction of the ring to the current node, each WC_LSP label corresponds to a leaving node, and different WC_LSP labels correspond to different leaving nodes respectively.

That is to say, the WC_LSP label configuration unit in the node A configures, on the node A and by taking the node B as a leaving node, a label 1 used to send a packet to the node B, configures, on the node A and by taking the node C as a leaving node, a label 2 used to send a packet to the node C, and configures, on the node A and by taking the node D as a FCWC_LN, a label 3 used to send a packet to the node D. The label 1, the label 2, and the label 3 are WC_LSP labels and are allocated by a next hop node of the node A in the forward direction of the ring to the node A. When the forward direction is clockwise, the next hop node is the node D, and when the forward direction is anticlockwise, the next hop node is the node B. For a packet that needs to leave at the node B along the forward chain working channel, the node A sends the packet by using the label 1; for a packet that needs to leave at the node C along the forward chain working channel, the node A sends the packet by using the label 2; and for a packet that needs to leave at the node D along the forward chain working channel, the node A sends the packet by using the label 3.

On the current node, the WC_LSP label correspondence configuration unit in the node A configures, by taking each node in a second group of FCWC_LNs as a leaving node, WC_LSP label correspondence, where WC_LSP label correspondence taking a node i in the second group of FCWC_LNs as a leaving node includes correspondence between a WC_LSP label configured in the current node and used to send a packet to the node i and a WC_LSP label allocated by the current node to a previous hop node of the current node in the forward direction of the ring and used to send a packet to the node i, the second group of FCWC_LNs is other nodes except the previous hop node of the current node in the forward direction of the ring in the first group of FCWC_LNs, and the node i is any node in the second group of FCWC_LNs.

That is to say, in the ring network shown in FIG. 6, when the forward direction is clockwise, the previous hop node of the current node in the forward direction of the ring is the node B, so the second group of FCWC_LNs is the node C and the node D; when the forward direction is anticlockwise, the previous hop node of the current node in the forward direction of the ring is the node D, so the second group of FCWC_LNs is the node B and the node C.

When the forward direction is clockwise, WC_LSP label correspondence taking the node C and the node D as leaving nodes is configured on the node A respectively. The WC_LSP label correspondence taking the node C as a leaving node includes correspondence between the label 2 and a label 4 allocated by the node A to the node B and used to send a packet to the node C, and the WC_LSP label correspondence taking the node D as a leaving node includes correspondence between the label 3 and a label 5 allocated by node A to the node B and used to send a packet to the node D.

When the forward direction is anticlockwise, a method for configuring WC_LSP label correspondence on the node A is performed with reference to the foregoing method.

An example that the forward direction is clockwise is continuously taken. When a packet outside the ring enters from the node A and needs to leave at any one of the node B, the node C, and the node D, the node A may send the packet to a corresponding leaving node by using a corresponding WC_LSP label. When the node A receives a packet sent by a previous hop node, for example, the node B, along the forward chain working channel, the node A determines a new WC_LSP label according to a WC_LSP label in the packet and the WC_LSP label correspondence configured in the node A, switches a working label to the new WC_LSP label, and forwards the packet to a leaving node of the packet.

The node B, the node C, and the node D perform an operation corresponding to an operation of the node A. The four nodes are connected together, so as to enable a packet outside the ring to enter from any node and be forwarded to a leaving node of the packet in the forward direction of the ring.

In this embodiment, the sending, by a node on the ring, a packet to a leaving node of the packet refers to sending the packet to the leaving node of the packet hop by hop.

Optionally, this embodiment may further include the following content.

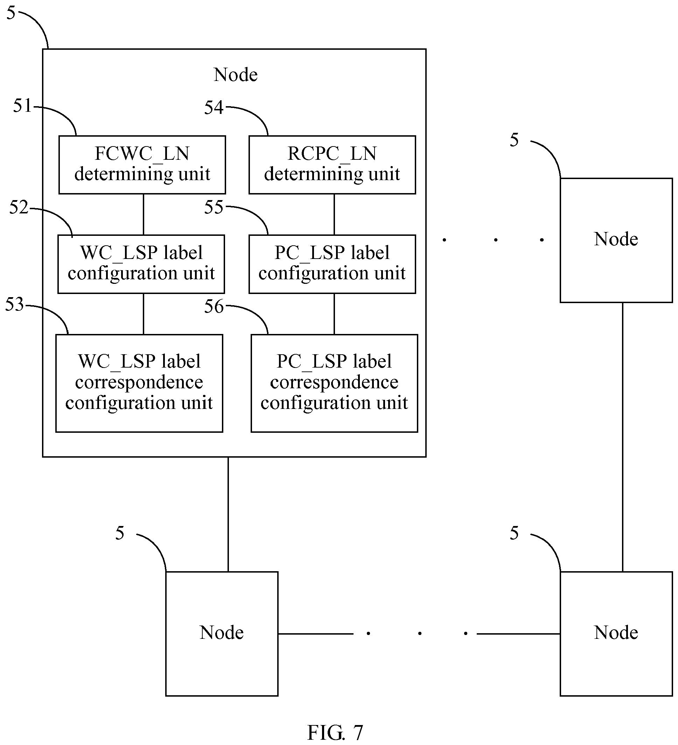

As shown in FIG. 7, in addition to the FCWC_LN determining unit 51, the WC_LSP label configuration unit 52, and the WC_LSP label correspondence configuration unit 53, each node in the ring network may further include a reverse chain protecting channel leaving node (RCPC_LN) determining unit 54, a protecting channel label switched path label (PC_LSP label) configuration unit 55, and a protecting channel label switched path label (PC_LSP label) correspondence configuration unit 56.

The RCPC_LN determining unit 54 is configured to determine a first group of reverse chain protecting channel leaving nodes (RCPC_LN), where the first group of RCPC_LNs includes other nodes except the current node on the ring.

The PC_LSP label configuration unit 55 is configured to: on the current node, configure, by taking each node in the first group of RCPC_LNs as a leaving node, a PC_LSP label used to send a packet to each node in the first group of RCPC_LNs, where each PC_LSP label is allocated by a next hop node of the current node in a reverse direction of the ring to the current node, each PC_LSP label corresponds to a leaving node, and different PC_LSP labels correspond to different leaving nodes respectively.

The PC_LSP label correspondence configuration unit 56 is configured to: on the current node, configure, by taking each node in a second group of RCPC_LNs as a leaving node, PC_LSP label correspondence, where PC_LSP label correspondence taking a node j in the second group of RCPC_LNs as a leaving node includes correspondence between a PC_LSP label configured in the current node and used to send a packet to the node j and a PC_LSP label allocated by the current node to a previous hop node of the current node in the reverse direction of the ring and used to send a packet to the node j, the second group of RCPC_LNs is other nodes except the previous hop node of the current node in the reverse direction of the ring in the first group of RCPC_LNs, and the node j is any node in the second group of RCPC_LNs.

The PC_LSP label is a label used to send a packet to a leaving node of the packet in the reverse direction of the ring or along the reverse chain protecting channel.

Because each node includes the RCPC_LN determining unit 54, the PC_LSP label configuration unit 55, and the PC_LSP label correspondence configuration unit 56, in the ring network including n nodes, n reverse chain protecting channels are generated, an egress node of each reverse chain protecting channel is a leaving node, and leaving nodes of n reverse chain protecting channels are different from each other. In this way, each node may send a packet to a leaving node of the packet along a reverse chain protecting channel.

When a link fault occurs between nodes in the ring network, so that a packet cannot be sent to a leaving node of the packet along the forward chain working channel, the packet may be sent to the leaving node along a corresponding reverse chain protecting channel.

Preferably, each node on the ring further includes a channel switching label correspondence configuration unit 510. The channel switching label correspondence configuration unit 510 is configured to configure correspondence for a WC_LSP label and a PC_LSP label that correspond to a same leaving node.

When a node on the ring determines that a packet needs to be switched from a forward chain working channel to a reverse chain protecting channel having a same leaving node as the forward chain working channel, the node determines a corresponding PC_LSP label according to a WC_LSP label of the packet and channel switching label correspondence configured in the node. Then, the node sends the packet to the leaving node through a reverse chain protecting channel by using the corresponding PC_LSP label.

Optionally, this embodiment may further include the following content.

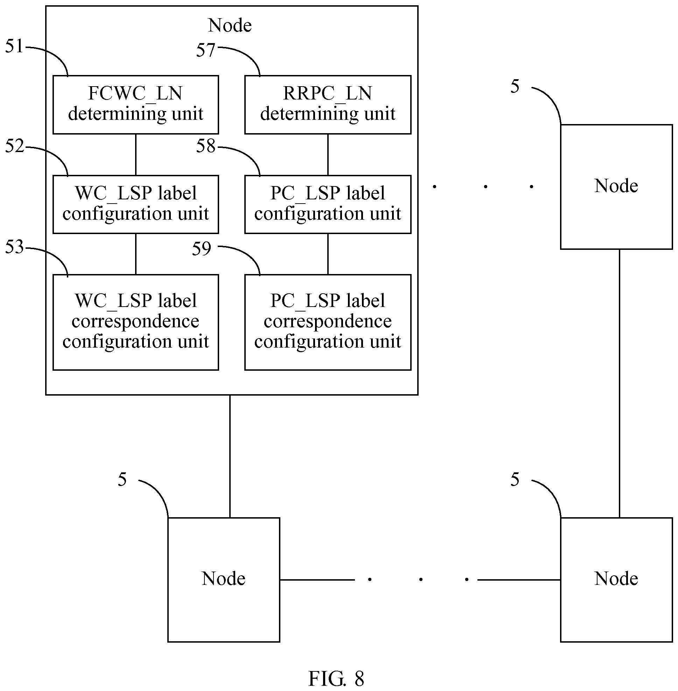

As shown in FIG. 8, in addition to the FCWC_LN determining unit 51, the WC_LSP label configuration unit 52, and the WC_LSP label correspondence configuration unit 53, each node in the ring network may further include a reverse ring protecting channel leaving node (RRPC_LN) determining unit 57, a protecting channel label switched path label (PC_LSP label) configuration unit 58, and protecting channel label switched path label (PC_LSP label) correspondence configuration unit 59.

The RRPC_LN determining unit 57 is configured to determine a first group of reverse ring protecting channel leaving nodes (RRPC_LN), where the first group of RRPC_LNs includes other nodes except the current node on the ring.

The PC_LSP label configuration unit 58 is configured to: on the current node, configure, by taking each node in the first group of RRPC_LNs as a leaving node, a PC_LSP label used to send a packet to each node in the first group of RRPC_LNs, where each PC_LSP label is allocated by a next hop node of the current node in a reverse direction of the ring to the current node, each PC_LSP label corresponds to a leaving node, and different PC_LSP labels correspond to different leaving nodes respectively.

The PC_LSP label correspondence configuration unit 59 is configured to: on the current node, configure, by taking each node in the first group of RRPC_LNs as a leaving node, PC_LSP label correspondence, where PC_LSP label correspondence taking a node k in the first group of RRPC_LNs as a leaving node includes correspondence between a PC_LSP label configured in the current node and used to send a packet to the node k and a PC_LSP label allocated by the current node to a previous hop node of the current node in the reverse direction of the ring and used to send a packet to the node k, and the node k is any node in the first group of RRPC_LNs. The PC_LSP label is a label used to send a packet to a leaving node of the packet in the reverse direction of the ring or along the reverse ring protecting channel.

Because each node includes the RRPC_LN determining unit 57, the PC_LSP label configuration unit 58, and the PC_LSP label correspondence configuration unit 59, in the ring network including n nodes, n reverse ring protecting channels are generated, each reverse ring protecting channel has a leaving node, and leaving nodes of n reverse ring protecting channels are different from each other. In this way, each node may send a packet to a leaving node of the packet along a reverse ring protecting channel.

When a link fault occurs between nodes in the ring network, so that a packet cannot be sent to a leaving node of the packet along the forward chain working channel, the packet may be sent along a corresponding reverse ring protecting channel.

Preferably, each node on the ring further includes a channel switching label correspondence configuration unit 511. The channel switching label correspondence configuration unit 511 is configured to configure correspondence for a WC_LSP label and a PC_LSP label that correspond to a same leaving node.

When a node on the ring determines that a packet needs to be switched from a forward chain working channel to a reverse ring protecting channel having a same leaving node as the forward chain working channel, the node determines, according to a WC_LSP label of the packet and channel switching label correspondence configured in the node, a PC_LSP label corresponding to the WC_LSP label. Then, the node continuously sends, by using the PC_LSP label, the packet through a reverse ring protecting channel corresponding to the PC_LSP label.

### Embodiment 3

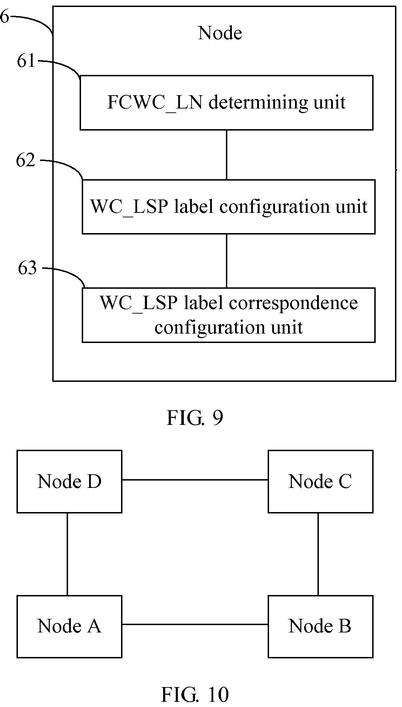

As shown in FIG. 9, an embodiment of the present invention discloses a node 6, where the node is configured to form a ring network with multiple same nodes. Optionally, the node is a router or a switch.

The node includes a forward chain working channel leaving node (FCWC_LN) determining unit 61, a working channel label switched path label (WC_LSP label) configuration unit 62, and a working channel label switched path label (WC_LSP label) correspondence configuration unit 63.

The FCWC_LN determining unit 61 is configured to determine a first group of FCWC_LNs, where the first group of FCWC_LNs includes other nodes except the current node on a ring.

The WC_LSP label configuration unit 62 is configured to: on the current node, configure, by taking each node in the first group of FCWC_LNs as a leaving node, a WC_LSP label used to send a packet to each node in the first group of FCWC_LNs, where each WC_LSP label is allocated by a next hop node of the current node in a forward direction of the ring to the current node, each WC_LSP label corresponds to a leaving node, and different WC_LSP labels correspond to different leaving nodes respectively.

The WC_LSP label correspondence configuration unit 63 is configured to: on the current node, configure, by taking each node in a second group of FCWC_LNs as a leaving node, WC_LSP label correspondence, where WC_LSP label correspondence taking a node i in the second group of FCWC_LNs as a leaving node includes correspondence between a WC_LSP label configured in the current node and used to send a packet to the node i and a WC_LSP label allocated by the current node to a previous hop node of the current node in the forward direction of the ring and used to send a packet to the node i, the second group of FCWC_LNs is other nodes except the previous hop node of the current node in the forward direction of the ring in the first group of FCWC_LNs, and the node i is any node in the second group of FCWC_LNs.

The WC_LSP label is a label used to send a packet to a leaving node of the packet in the forward direction of the ring or along the forward chain working channel.

In this embodiment, the forward direction is clockwise or anticlockwise.

Optionally, in this embodiment, the node may include an entry packet processing unit. The entry packet processing unit is configured to determine a FCWC_LN of an entry packet after a node where the entry packet processing unit is located receives the entry packet, determine a WC_LSP label for the entry packet according to the FCWC_LN of the entry packet, and push (push) the determined WC_LSP label into the entry packet and perform packet forwarding.

When multiple nodes in this embodiment form a ring network, a WC_LSP label for reaching any other node on the ring is configured in each node in the ring network system. Therefore, after receiving an entry packet, any node in the ring network may encapsulate the entry packet by using a WC_LSP label corresponding to the entry packet, that is, push a corresponding WC_LSP label into the entry packet, and then send the entry packet encapsulated with the WC_LSP label to a leaving node of the entry packet.

In addition, the WC_LSP label correspondence is configured in each node in the ring network; therefore, when receiving a packet sent by another node on the ring to a node, the node may determine a new WC_LSP label according to a WC_LSP label carried in the packet and the WC_LSP label correspondence, switch a working label to the new WC_LSP label, and continuously send the packet to a leaving node of the packet.

In this embodiment, for a ring network formed by n nodes, each node in the n nodes includes the forward chain working channel leaving node FCWC_LN determining unit, the working channel label switched path label (WC_LSP label) configuration unit, and the working channel label switched path label (WC_LSP label) correspondence configuration unit, where n□2 and n is a natural number. In this way, in the ring network, n forward chain working channels are generated, an egress node of each forward chain working channel is a node in the ring network, and egress nodes of any two forward chain working channels are different. The n forward chain working channels are combined together, to ensure that a packet that needs to leave from any node on the ring can be forwarded to a corresponding leaving node. A node on the ring does not need to perform different forwarding polices for services of different entry nodes.

A ring network system shown in FIG. 10 includes a node A, a node B, a node C, and a node D. Each of the node A, the node B, the node C, and the node D includes a FCWC_LN determining unit, a WC_LSP label configuration unit, and a WC_LSP label correspondence configuration unit.

The node A is taken as an example, and each unit in the node A performs the following operations.

The FCWC_LN determining unit in the node A determines a first group of FCWC_LNs, where the first group of FCWC_LNs includes other nodes except the current node on a ring.

That is to say, the FCWC_LN determining unit in the node A determines the node B, the node C, and the node D as the first group of FCWC_LNs.

On the current node, the WC_LSP label configuration unit in the node A configures, by taking each node in the first group of FCWC_LNs as a leaving node, a WC_LSP label used to send a packet to each node in the first group of FCWC_LNs, where each WC_LSP label is allocated by a next hop node of the current node in a forward direction of the ring to the current node, each WC_LSP label corresponds to a leaving node, and different WC_LSP labels correspond to different leaving nodes respectively.

That is to say, the WC_LSP label configuration unit in the node A configures, on the node A and by taking the node B as a leaving node, a label 1 used to send a packet to the node B, configures, on the node A and by taking the node C as a leaving node, a label 2 used to send a packet to the node C, and configures, on the node A and by taking the node D as a FCWC_LN, a label 3 used to send a packet to the node D. The label 1, the label 2, and the label 3 are WC_LSP labels and are allocated by a next hop node of the node A in the forward direction of the ring to the node A. When the forward direction is clockwise, the next hop node is the node D, and when the forward direction is anticlockwise, the next hop node is the node B. For a packet that needs to leave at the node B along the forward chain working channel, the node A sends the packet by using the label 1; for a packet that needs to leave at the node C along the forward chain working channel, the node A sends the packet by using the label 2; and for a packet that needs to leave at the node D along the forward chain working channel, the node A sends the packet by using the label 3.

On the current node, the WC_LSP label correspondence configuration unit in the node A configures, by taking each node in a second group of FCWC_LNs as a leaving node, WC_LSP label correspondence, where WC_LSP label correspondence taking a node i in the second group of FCWC_LNs as a leaving node includes correspondence between a WC_LSP label configured in the current node and used to send a packet to the node i and a WC_LSP label allocated by the current node to a previous hop node of the current node in the forward direction of the ring and used to send a packet to the node i, the second group of FCWC_LNs is other nodes except the previous hop node of the current node in the forward direction of the ring in the first group of FCWC_LNs, and the node i is any node in the second group of FCWC_LNs.

That is to say, in the ring network shown in FIG. 10, when the forward direction is clockwise, the previous hop node of the current node in the forward direction of the ring is the node B, so the second group of FCWC_LNs is the node C and the node D; when the forward direction is anticlockwise, the previous hop node of the current node in the forward direction of the ring is the node D, so the second group of FCWC_LNs is the node B and the node C.

When the forward direction is clockwise, WC_LSP label correspondence taking the node C and the node D as leaving nodes is configured on the node A respectively. The WC_LSP label correspondence taking the node C as a leaving node includes correspondence between the label 2 and a label 4 allocated by the node A to the node B and used to send a packet to the node C, and the WC_LSP label correspondence taking the node D as a leaving node includes correspondence between the label 3 and a label 5 allocated by node A to the node B and used to send a packet to the node D.

When the forward direction is anticlockwise, a method for configuring WC_LSP label correspondence on the node A is performed with reference to the foregoing method.

An example that the forward direction is clockwise is continuously taken. When a packet outside the ring enters from the node A and needs to leave at any one of the node B, the node C, and the node D, the node A may send the packet to a corresponding leaving node by using a corresponding WC_LSP label. When the node A receives a packet sent by a previous hop node, for example, the node B, along the forward chain working channel, the node A determines a new WC_LSP label according to a WC_LSP label in the packet and the WC_LSP label correspondence configured in the node A, switches a working label to the new WC_LSP label, and forwards the packet to a leaving node of the packet.

The node B, the node C, and the node D perform an operation corresponding to an operation of the node A. The four nodes are connected together, so as to enable a packet outside the ring to enter from any node and be forwarded to a leaving node of the packet in the forward direction of the ring.

Optionally, in this embodiment, the sending, by a node on the ring, a packet to a leaving node of the packet refers to sending the packet to the leaving node of the packet hop by hop.

Optionally, this embodiment may further include the following content.

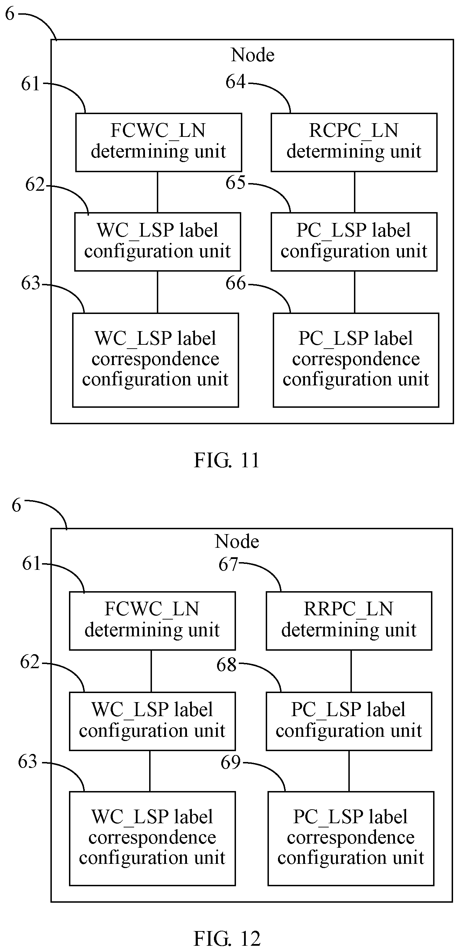

As shown in FIG. 11, in addition to the FCWC_LN determining unit 61, the WC_LSP label configuration unit 62, and the WC_LSP label correspondence configuration unit 63, the node 6 may further include a reverse chain protecting channel leaving node (RCPC_LN) determining unit 64, a protecting channel label switched path label (PC_LSP label) configuration unit 65, and a protecting channel label switched path label (PC_LSP label) correspondence configuration unit 66.

The RCPC_LN determining unit 64 is configured to determine a first group of reverse chain protecting channel leaving nodes (RCPC_LN), where the first group of RCPC_LNs includes other nodes except the current node on the ring.

The PC_LSP label configuration unit 65 is configured to: on the current node, configure, by taking each node in the first group of RCPC_LNs as a leaving node, a PC_LSP label used to send a packet to each node in the first group of RCPC_LNs, where each PC_LSP label is allocated by a next hop node of the current node in a reverse direction of the ring to the current node, each PC_LSP label corresponds to a leaving node, and different PC_LSP labels correspond to different leaving nodes respectively.

The PC_LSP label correspondence configuration unit 66 is configured to: on the current node, configure, by taking each node in a second group of RCPC_LNs as a leaving node, PC_LSP label correspondence, where PC_LSP label correspondence taking a node j in the second group of RCPC_LNs as a leaving node includes correspondence between a PC_LSP label configured in the current node and used to send a packet to the node j and a PC_LSP label allocated by the current node to a previous hop node of the current node in the reverse direction of the ring and used to send a packet to the node j, the second group of RCPC_LNs is other nodes except the previous hop node of the current node in the reverse direction of the ring in the first group of RCPC_LNs, and the node j is any node in the second group of RCPC_LNs.

The PC_LSP label is a label used to send a packet to a leaving node of the packet in the reverse direction of the ring or along the reverse chain protecting channel.

For the ring network formed by the multiple nodes, because each node includes the RCPC_LN determining unit, the PC_LSP label configuration unit, and the PC_LSP label correspondence configuration unit, in the ring network including n nodes, n reverse chain protecting channels are generated, an egress node of each reverse chain protecting channel is a leaving node, and leaving nodes of n reverse chain protecting channels are different from each other. In this way, each node may send a packet to a leaving node of the packet along a reverse chain protecting channel. When a link fault occurs between nodes in the ring network, so that a packet cannot be sent to a leaving node of the packet along the forward chain working channel, the packet may be sent to the leaving node along a corresponding reverse chain protecting channel.

Preferably, each node on the ring further includes a channel switching label correspondence configuration unit 610. The channel switching label correspondence configuration unit is configured to configure correspondence for a WC_LSP label and a PC_LSP label that correspond to a same leaving node.

When a node on the ring determines that a packet needs to be switched from a forward chain working channel to a reverse chain protecting channel having a same leaving node as the forward chain working channel, the node determines a corresponding PC_LSP label according to a WC_LSP label of the packet and channel switching label correspondence configured in the node. Then, the node sends the packet to the leaving node through a reverse chain protecting channel by using the corresponding PC_LSP label.

Optionally, this embodiment may further include the following content.

As shown in FIG. 12, in addition to the FCWC_LN determining unit 61, the WC_LSP label configuration unit 62, and the WC_LSP label correspondence configuration unit 63, the node 6 may further include a reverse ring protecting channel leaving node (RRPC_LN) determining unit 67, a protecting channel label switched path label (PC_LSP label) configuration unit 68, and a protecting channel label switched path label (PC_LSP label) correspondence configuration unit 69.

The RRPC_LN determining unit 67 is configured to determine a first group of reverse ring protecting channel leaving nodes (RRPC_LN), where the first group of RRPC_LNs includes other nodes except the current node on the ring.

The PC_LSP label configuration unit 68 is configured to: on the current node, configure, by taking each node in the first group of RRPC_LNs as a leaving node, a PC_LSP label used to send a packet to each node in the first group of RRPC_LNs, where each PC_LSP label is allocated by a next hop node of the current node in a reverse direction of the ring to the current node, each PC_LSP label corresponds to a leaving node, and different PC_LSP labels correspond to different leaving nodes respectively.

The PC_LSP label correspondence configuration unit 69 is configured to: on the current node, configure, by taking each node in the first group of RRPC_LNs as a leaving node, PC_LSP label correspondence, where PC_LSP label correspondence taking a node k in the first group of RRPC_LNs as a leaving node includes correspondence between a PC_LSP label configured in the current node and used to send a packet to the node k and a PC_LSP label allocated by the current node to a previous hop node of the current node in the reverse direction of the ring and used to send a packet to the node k, and the node k is any node in the first group of RRPC_LNs. The PC_LSP label is a label used to send a packet to a leaving node of the packet in the reverse direction of the ring or along the reverse ring protecting channel.

For the ring network formed by the multiple nodes, because each node includes the RRPC_LN determining unit, the PC_LSP label configuration unit, and the PC_LSP label correspondence configuration unit, in the ring network including n nodes, n reverse ring protecting channels are generated, each reverse ring protecting channel has a leaving node, and leaving nodes of n reverse ring protecting channels are different from each other. In this way, each node may send a packet to a leaving node of the packet along a reverse ring protecting channel.

When a link fault occurs between nodes in the ring network, so that a packet cannot be sent to a leaving node of the packet along the forward chain working channel, the packet may be sent along a corresponding reverse ring protecting channel.

Preferably, each node on the ring further includes a channel switching label correspondence configuration unit 611. The channel switching label correspondence configuration unit is configured to configure correspondence for a WC_LSP label and a PC_LSP label that correspond to a same leaving node.

When a node on the ring determines that a packet needs to be switched from a forward chain working channel to a reverse ring protecting channel having a same leaving node as the forward chain working channel, the node determines, according to a WC_LSP label of the packet and channel switching label correspondence configured in the node, a PC_LSP label corresponding to the WC_LSP label. Then, the node continuously sends, by using the PC_LSP label, the packet through a reverse ring protecting channel corresponding to the PC_LSP label.

In the embodiment of the present invention, any unit may be a hardware entity or a software virtual unit.

Persons of ordinary skill in the art should understand that, all or part of the steps of the foregoing method embodiments may be implemented by a program instructing relevant hardware. The foregoing program may be stored in a computer readable storage medium. When the program is run, the steps in the foregoing method embodiments are performed. The foregoing storage medium may be any medium capable of storing program codes, such as a ROM, a RAM, a magnetic disk, or an optical disk.

The foregoing description is merely specific exemplary implementation manners of the present invention, but is not intended to limit the protection scope of the present invention. Any variation or replacement readily figured out by persons skilled in the art within the technical scope disclosed in the present invention shall fall within the protection scope of the present invention.

## Claims

1. A network configuration method, applied in a ring comprising n nodes, wherein n is larger than 2 and n is a natural number, comprising:
by taking each node on the ring as a forward chain working channel leaving node, FCWC_LN, establishing a forward chain working channel for each FCWC_LN, wherein a packet that needs to leave from a node on the ring is forwarded to a corresponding FCWC_LN and leave the ring from the corresponding FCWC_LN;
wherein the establishing each forward chain working channel comprises:
determining (11) a node on the ring as the FCWC_LN;
on each node except the FCWC_LN on the ring, configuring (12) a working channel label switched path label, WC_LSP label, used to send a packet to the FCWC_LN in a forward direction of the ring, wherein the WC_LSP label configured on each node except the FCWC_LN is allocated by a next hop node of each node except the FCWC_LN in the forward direction of the ring to each node except the FCWC_LN; and
in a label forwarding table of each node except the FCWC_LN and a next hop node of the FCWC_LN in the forward direction of the ring, configuring (13) WC_LSP label correspondence, wherein each node except the FCWC_LN and the next hop node of the FCWC_LN in the forward direction of the ring is an intermediate node of the forward chain working channel, and the WC_LSP label correspondence is correspondence between a WC_LSP label allocated by a next hop node of each intermediate node of the forward chain working channel in the forward direction of the ring to each intermediate node of the forward chain working channel and a WC_LSP label allocated by each intermediate node of the forward chain working channel to a previous hop node of each intermediate node of the forward chain working channel in the forward direction of the ring;
by taking each node on the ring as a reverse chain protecting channel leaving node, RCPC_LN, establishing a reverse chain protecting channel for each RCPC_LN,
wherein the establishing each reverse chain protecting channel comprises:
determining (21) a node on the ring as the RCPC_LN;
on each node except the RCPC_LN on the ring, configuring (22) a protecting channel label switched path label, PC_LSP label, used to send a packet to the RCPC_LN in a reverse direction of the ring, wherein the PC_LSP label configured on each node except the RCPC_LN is allocated by a next hop node of each node except the RCPC_LN in the reverse direction of the ring to each node except the RCPC_LN; and
in a label forwarding table of each node except the RCPC_LN and a next hop node of the RCPC_LN in the reverse direction of the ring, configuring (23) PC_LSP label correspondence, wherein a node except the RCPC_LN and the next hop node of the RCPC_LN in the reverse direction of the ring is an intermediate node of the reverse chain protecting channel, and the PC_LSP label correspondence is correspondence between a PC_LSP label allocated by a next hop node of each intermediate node of the reverse chain protecting channel in the reverse direction of the ring to each intermediate node of the reverse chain protecting channel and a PC_LSP label allocated by each intermediate node of the reverse chain protecting channel to a previous hop node of each intermediate node of the reverse chain protecting channel in the reverse direction of the ring;
wherein in each node on the ring, channel switching label correspondence is configured, the channel switching label correspondence is correspondence between the WC_LSP label and the PC_LSP label, and a forward chain working channel corresponding to a WC_LSP label in channel switching label correspondence has a same leaving node as a reverse chain protecting channel corresponding to a PC_LSP label in the same channel switching label correspondence;
the method further comprising:
determining, by two nodes on the ring, that a link fault occurs between the two nodes, wherein one of the two nodes is a local node of a faulty link, and the other one is a peer node of the faulty link;
receiving, by the local node of the faulty link and through a forward chain working channel, a to-be-forwarded packet that needs to pass through the faulty link;
determining, by the local node of the faulty link and according to a WC_LSP label of the to-be-forwarded packet and the channel switching label correspondence, a PC_LSP label for the to-be-forwarded packet; and
by using the determined PC_LSP label and along a reverse chain protecting channel corresponding to the determined PC_LSP label, sending, by the local node of the faulty link, the to-be-forwarded packet to a leaving node of the to-be-forwarded packet.

2. The method according claim 1, further comprising:
determining, by a node on the ring, a FCWC_LN of an entry packet after receiving the entry packet;
determining a WC_LSP label for the entry packet according to the FCWC_LN of the entry packet; and
pushing the determined WC_LSP label into the entry packet and performing packet forwarding.

3. A network configuration method, applied in a ring comprising n nodes, wherein n is larger than 2 and n is a natural number, comprising:
by taking each node on the ring as a forward chain working channel leaving node, FCWC_LN, establishing a forward chain working channel for each FCWC_LN, wherein a packet that needs to leave from a node on the ring is forwarded to a corresponding FCWC_LN and leave the ring from the corresponding FCWC_LN;
wherein the establishing each forward chain working channel comprises:
determining (11) a node on the ring as the FCWC_LN;
on each node except the FCWC_LN on the ring, configuring (12) a working channel label switched path label, WC_LSP label, used to send a packet to the FCWC_LN in a forward direction of the ring, wherein the WC_LSP label configured on each node except the FCWC_LN is allocated by a next hop node of each node except the FCWC_LN in the forward direction of the ring to each node except the FCWC_LN; and
in a label forwarding table of each node except the FCWC_LN and a next hop node of the FCWC_LN in the forward direction of the ring, configuring (13) WC_LSP label correspondence, wherein each node except the FCWC_LN and the next hop node of the FCWC_LN in the forward direction of the ring is an intermediate node of the forward chain working channel, and the WC_LSP label correspondence is correspondence between a WC_LSP label allocated by a next hop node of each intermediate node of the forward chain working channel in the forward direction of the ring to each intermediate node of the forward chain working channel and a WC_LSP label allocated by each intermediate node of the forward chain working channel to a previous hop node of each intermediate node of the forward chain working channel in the forward direction of the ring;
by taking each node on the ring as a reverse ring protecting channel leaving node, RRPC_LN, establishing a reverse ring protecting channel for each RRPC_LN,
wherein the establishing each reverse ring protecting channel comprises:
determining (31) a node on the ring as the RRPC_LN;
on each node on the ring, configuring (32) a protecting channel label switched path label, PC_LSP label, used to send a packet to the RRPC_LN in a reverse direction of the ring, wherein the PC_LSP label configured on each node of the ring is allocated by a next hop node of each node on the ring in the reverse direction of the ring to each node on the ring; and
in a label forwarding table of each node on the ring, configuring (33) PC_LSP label correspondence, wherein the PC_LSP label correspondence is correspondence between a PC_LSP label allocated by the next hop node of each node on the ring in the reverse direction of the ring to each node on the ring and used to send a packet to the RRPC_LN in the reverse direction of the ring and a PC_LSP label allocated by each node on the ring to a previous hop node of each node on the ring in the reverse direction of the ring and used to send a packet to the RRPC_LN in the reverse direction of the ring;
wherein in each node on the ring, channel switching label correspondence is configured, the channel switching label correspondence is correspondence between the WC_LSP label and the PC_LSP label, and a forward chain working channel corresponding to a WC_LSP label in channel switching label correspondence has a same leaving node as a reverse ring protecting channel corresponding to a PC_LSP label in the same channel switching label correspondence;
the method further comprising:
determining, by two nodes on the ring, that a link fault occurs between the two nodes, wherein one of the two nodes is a local node of a faulty link, and the other one is a peer node of the faulty link;
receiving, by the local node of the faulty link and through a forward chain working channel, a to-be-forwarded packet that needs to pass through the faulty link;
determining, by the local node of the faulty link and according to a WC_LSP label of the to-be-forwarded packet and channel switching label correspondence in the local node of the faulty link, a PC_LSP label for the to-be-forwarded packet;
by using the determined PC_LSP label and along a reverse ring protecting channel corresponding to the determined PC_LSP label, sending, by the local node of the faulty link, the to-be-forwarded packet to the peer node of the faulty link; and
determining, by the peer node of the faulty link and according to the PC_LSP label in the to-be-forwarded packet and channel switching label correspondence in the peer node of the faulty link, a WC_LSP label for the to-be-forwarded packet, and sending, along the forward chain working channel, the to-be-forwarded packet to a leaving node of the to-be-forwarded packet.

4. The method according to claim 3, further comprising:
determining, by a node on the ring, a FCWC_LN of an entry packet after receiving the entry packet;
determining a WC_LSP label for the entry packet according to the FCWC_LN of the entry packet; and
pushing the determined WC_LSP label into the entry packet and performing packet forwarding.

## Patentansprüche

1. Netzwerkkonfigurationsverfahren, in einem Ring angewandt, der n Knoten umfasst, wobei n größer als 2 ist und n eine natürliche Zahl ist und das Verfahren Folgendes umfasst:
durch Führen jedes Knotens im Ring als einen Austrittsknoten für Vorwärtsketten-Arbeitskanäle, FCWC_LN, Einrichtung eines Vorwärtsketten-Arbeitskanals für jeden FCWC_LN, wobei ein Paket, das von einem Knoten im Ring austreten muss,
an einen entsprechenden FCWC_LN weitergeleitet wird und den Ring vom entsprechenden FCWC_LN verlässt;
wobei die Einrichtung jedes Vorwärtsketten-Arbeitskanals Folgendes umfasst:
Bestimmen (11) eines Knotens im Ring als den FCWC_LN;
Konfigurieren (12) eines "Label-Switched"-Pfad-Labels des Arbeitskanals, WC_LSP-Label, an jedem Knoten mit Ausnahme des FCWC_LN im Ring, das verwendet wird, um in einer Vorwärtsrichtung des Rings ein Paket an den FCWC_LN zu senden, wobei das WC_LSP-Label, das an jedem Knoten mit Ausnahme des FCWC_LN konfiguriert ist, jedem Knoten mit Ausnahme des FCWC_LN durch einen nächsten "Hop"-Knoten jedes Knotens mit Ausnahme des FCWC_LN in Vorwärtsrichtung des Rings zugeordnet wird; und
in einer Label-Weiterleitungstabelle jedes Knotens mit Ausnahme des FCWC_LN und eines nächsten "Hop"-Knotens des FCWC_LN in der Vorwärtsrichtung des Rings, Konfigurieren (13) einer WC_LSP-Labelentsprechung, wobei jeder Knoten mit Ausnahme des FCWC_LN und des nächsten "Hop"-Knotens des FCWC_LN in der Vorwärtsrichtung des Rings ein Zwischenknoten des Vorwärtsketten-Arbeitskanals ist und die WC_LSP-Labelentsprechung eine Entsprechung zwischen einem WC_LSP-Label, das jedem Zwischenknoten des Vorwärtsketten-Arbeitskanals durch einen nächsten "Hop"-Knoten jedes Zwischenknotens des Vorwärtsketten-Arbeitskanals in der Vorwärtsrichtung des Rings zugeordnet wurde, und einem WC_LSP-Label ist, das einem vorangehenden "Hop"-Knoten jedes Zwischenknotens des Vorwärtsketten-Arbeitskanals in der Vorwärtsrichtung des Rings durch jeden Zwischenknoten des Vorwärtsketten-Arbeitskanals zugeordnet wurde;
durch Führen jedes Knotens im Ring als einen Austrittsknoten für Rückwärtsketten-Schutzkanäle, RCPC_LN, Einrichtung eines Rückwärtsketten-Schutzkanals für jeden RCPC_LN,
wobei die Einrichtung jedes Rückwärtsketten-Schutzkanals Folgendes umfasst:
Bestimmen (21) eines Knotens im Ring als den RCPC_LN;
Konfigurieren (22) eines "Label-Switched"-Pfad-Labels des Schutzkanals, PC_LSP-Label, an jedem Knoten mit Ausnahme des RCPC_LN im Ring, das verwendet wird, um in einer Rückwärtsrichtung des Rings ein Paket an den RCPC_LN zu senden, wobei das PC_LSP-Label, das an jedem Knoten mit Ausnahme des RCPC_LN konfiguriert ist, jedem Knoten mit Ausnahme des RCPC_LN durch einen nächsten "Hop"-Knoten jedes Knotens mit Ausnahme des RCPC_LN in Rückwärtsrichtung des Rings zugeordnet wird; und
in einer Label-Weiterleitungstabelle jedes Knotens mit Ausnahme des RCPC_LN und eines nächsten "Hop"-Knotens des RCPC_LN in der Rückwärtsrichtung des Rings, Konfigurieren (23) einer PC_LSP-Labelentsprechung, wobei ein Knoten mit Ausnahme des RCPC_LN und des nächsten "Hop"-Knotens des RCPC_LN in der Rückwärtsrichtung des Rings ein Zwischenknoten des Rückwärtsketten-Schutzkanals ist und die PC_LSP-Labelentsprechung eine Entsprechung zwischen einem PC LSP-Label, das jedem Zwischenknoten des Rückwärtsketten-Schutzkanals durch einen nächsten "Hop"-Knoten jedes Zwischenknotens des Rückwärtsketten-Schutzkanals in der Rückwärtsrichtung des Rings zugeordnet wurde, und einem PC_LSP-Label ist, das einem vorangehenden "Hop"-Knoten jedes Zwischenknotens des Rückwärtsketten-Schutzkanals in der Rückwärtsrichtung des Rings durch jeden Zwischenknoten des Rückwärtsketten-Schutzkanals zugeordnet wurde;
wobei in jedem Knoten im Ring eine Kanalumschaltungs-Labelentsprechung konfiguriert ist, die Kanalumschaltungs-Labelentsprechung eine Entsprechung zwischen dem WC_LSP-Label und dem PC_LSP-Label ist und ein Vorwärtsketten-Arbeitskanal, der in der Kanalumschaltungs-Labelentsprechung einem WC_LSP-Label entspricht, einen gleichen Austrittsknoten wie ein Rückwärtsketten-Schutzkanal aufweist, der in der gleichen Kanalumschaltungs-Labelentsprechung einem PC_LSP-Label entspricht;
wobei das Verfahren ferner Folgendes umfasst:
Ermitteln durch zwei Knoten im Ring, dass ein Verbindungsfehler zwischen den zwei Knoten eintritt, wobei einer der zwei Knoten ein lokaler Knoten einer fehlerhaften Verbindung ist und der andere ein "Peer"-Knoten der fehlerhaften Verbindung ist;
Empfangen eines weiterzuleitenden Pakets, das die fehlerhafte Verbindung durchlaufen muss, durch den lokalen Knoten der fehlerhaften Verbindung und durch einen Vorwärtsketten-Arbeitskanal;
Ermitteln eines PC_LSP-Labels für das weiterzuleitende Paket durch den lokalen Knoten der fehlerhaften Verbindung und nach einem WC_LSP-Label des weiterzuleitenden Pakets und der Kanalumschaltungs-Labelentsprechung; und
Senden unter Verwendung des ermittelten PC_LSP-Labels und entlang eines Rückwärtsketten-Schutzkanals, der dem ermittelten PC_LSP-Label entspricht, des weiterzuleitenden Pakets an einen Austrittsknoten des weiterzuleitenden Pakets durch den lokalen Knoten der fehlerhaften Verbindung.

2. Verfahren nach Anspruch 1, das ferner Folgendes umfasst:
Ermitteln eines FCWC_LN eines Eingangspakets durch einen Knoten im Ring nach Empfangen des Eingangspakets;
Ermitteln eines WC_LSP-Labels für das Eingangspaket nach dem FCWC_LN des Eingangspakets; und
Schieben des ermittelten WC_LSP-Labels in das Eingangspaket und Durchführen der Paketweiterleitung.

3. Netzwerkkonfigurationsverfahren, in einem Ring angewandt, der n Knoten umfasst, wobei n größer als 2 ist und n eine natürliche Zahl ist und das Verfahren Folgendes umfasst:
durch Führen jedes Knotens im Ring als einen Austrittsknoten für Vorwärtsketten-Arbeitskanäle, FCWC_LN, Einrichtung eines Vorwärtsketten-Arbeitskanals für jeden FCWC_LN, wobei ein Paket, das von einem Knoten im Ring austreten muss, an einen entsprechenden FCWC_LN weitergeleitet wird und den Ring vom entsprechenden FCWC_LN verlässt;
wobei die Einrichtung jedes Voiwärtsketten-Arbeitskanals Folgendes umfasst:
Bestimmen (11) eines Knotens im Ring als den FCWC_LN;
Konfigurieren (12) eines "Label-Switched"-Pfad-Labels des Arbeitskanals, WC_LSP-Label, an jedem Knoten mit Ausnahme des FCWC_LN im Ring, das verwendet wird, um in einer Vorwärtsrichtung des Rings ein Paket an den FCWC_LN zu senden, wobei das WC_LSP-Label, das an jedem Knoten mit Ausnahme des FCWC_LN konfiguriert ist, jedem Knoten mit Ausnahme des FCWC_LN durch einen nächsten "Hop"-Knoten jedes Knotens mit Ausnahme des FCWC_LN in der Vorwärtsrichtung des Rings zugeordnet wird; und
in einer Label-Weiterleitungstabelle jedes Knotens mit Ausnahme des FCWC_LN und eines nächsten "Hop"-Knotens des FCWC_LN in der Vorwärtsrichtung des Rings, Konfigurieren (13) einer WC_LSP-Labelentsprechung, wobei jeder Knoten mit Ausnahme des FCWC_LN und des nächsten "Hop"-Knotens des FCWC_LN in der Vorwärtsrichtung des Rings ein Zwischenknoten des Vorwärtsketten-Arbeitskanals ist und die WC_LSP-Labelentsprechung eine Entsprechung zwischen einem WC_LSP-Label, das jedem Zwischenknoten des Vorwärtsketten-Arbeitskanals durch einen nächsten "Hop"-Knoten jedes Zwischenknotens des Vorwärtsketten-Arbeitskanals in der Vorwärtsrichtung des Rings zugeordnet wurde, und einem WC_LSP-Label ist, das einem vorangehenden "Hop"-Knoten jedes Zwischenknotens des Vorwärtsketten-Arbeitskanals in der Vorwärtsrichtung des Rings durch jeden Zwischenknoten des Vorwärtsketten-Arbeitskanals zugeordnet wurde;
durch Führen jedes Knotens im Ring als einen Austrittsknoten für Rückwärtsring-Schutzkanäle, RRPC_LN, Einrichtung eines Rückwärtsring-Schutzkanals für jeden RRPC_LN,
wobei die Einrichtung jedes Rückwärtsring-Schutzkanals Folgendes umfasst:
Bestimmen (31) eines Knotens im Ring als den RRPC_LN;
Konfigurieren (32) eines "Label-Switched"-Pfad-Labels des Schutzkanals, PC_LSP-Label, an jedem Knoten im Ring, das verwendet wird, um in einer Rückwärtsrichtung des Rings ein Paket an den RRPC_LN zu senden, wobei das PC_LSP-Label, das an jedem Knoten des Rings konfiguriert ist, jedem Knoten des Rings durch einen nächsten "Hop"-Knoten jedes Knotens des Rings in Rückwärtsrichtung des Rings zugeordnet wird; und
Konfigurieren (33) einer PC_LSP-Labelentsprechung in einer Label-Weiterleitungstabelle jedes Knotens im Ring, wobei die PC_LSP-Labelentsprechung eine Entsprechung zwischen einem PC_LSP-Label, das jedem Knoten im Ring durch den nächsten "Hop"-Knoten jedes Knotens im Ring in der Rückwärtsrichtung des Rings zugeordnet wurde und verwendet wird, um ein Paket an den RRPC_LN in der Rückwärtsrichtung des Rings zu senden, und einem PC_LSP-Label ist, das einem vorangehenden "Hop"-Knoten jedes Knotens im Ring in der Rückwärtsrichtung des Rings durch jeden Knoten des Rings zugeordnet wurde und verwendet wird, um ein Paket an den RRPC_LN in der Rückwärtsrichtung des Rings zu senden;
wobei in jedem Knoten im Ring eine Kanalumschaltungs-Labelentsprechung konfiguriert ist, die Kanalumschaltungs-Labelentsprechung eine Entsprechung zwischen dem WC_LSP-Label und dem PC_LSP-Label ist und ein Vorwärtsketten-Arbeitskanal, der in der Kanalumschaltungs-Labelentsprechung einem WC_LSP-Label entspricht, einen gleichen Austrittsknoten wie ein Rückwärtsring-Schutzkanal aufweist, der in der gleichen Kanalumschaltungs-Labelentsprechung einem PC_LSP-Label entspricht;
wobei das Verfahren ferner Folgendes umfasst:
Ermitteln durch zwei Knoten im Ring, dass ein Verbindungsfehler zwischen den zwei Knoten eintritt, wobei einer der zwei Knoten ein lokaler Knoten einer fehlerhaften Verbindung ist und der andere ein "Peer"-Knoten der fehlerhaften Verbindung ist;
Empfangen eines weiterzuleitenden Pakets, das die fehlerhafte Verbindung durchlaufen muss, durch den lokalen Knoten der fehlerhaften Verbindung und durch einen Vorwärtsketten-Arbeitskanal;
Ermitteln eines PC_LSP-Labels für das weiterzuleitende Paket durch den lokalen Knoten der fehlerhaften Verbindung und nach einem WC_LSP-Label des weiterzuleitenden Pakets und der Kanalumschaltungs-Labelentsprechung im lokalen Knoten der fehlerhaften Verbindung; und
Senden unter Verwendung des ermittelten PC_LSP-Labels und entlang eines Rückwärtsring-Schutzkanals, der dem ermittelten PC_LSP-Label entspricht, des weiterzuleitenden Pakets an den "Peer"-Knoten der fehlerhaften Verbindung durch den lokalen Knoten der fehlerhaften Verbindung; und
Ermitteln eines WC_LSP-Labels für das weiterzuleitende Paket durch den "Peer"-Knoten der fehlerhaften Verbindung und nach dem PC_LSP-Label im weiterzuleitenden Paket und der Kanalumschaltungs-Labelentsprechung im "Peer"-Knoten der fehlerhaften Verbindung und Senden des weiterzuleitenden Pakets entlang des Vorwärtsketten-Arbeitskanals an einen Austrittsknoten des weiterzuleitenden Pakets.

4. Verfahren nach Anspruch 3, das ferner Folgendes umfasst:
Ermitteln eines FCWC_LN eines Eingangspakets durch einen Knoten im Ring nach Empfangen des Eingangspakets;
Ermitteln eines WC_LSP-Labels für das Eingangspaket nach dem FCWC_LN des Eingangspakets; und
Schieben des ermittelten WC_LSP-Labels in das Eingangspaket und Durchführen der Paketweiterleitung.

## Revendications

1. Procédé de configuration de réseau, appliqué dans un anneau comportant n noeuds, dans lequel n est supérieur à 2 et n est un nombre naturel, comprenant :
en prenant chaque noeud sur l'anneau comme un noeud de sortie de canal de travail de chaîne avant, FCWC_LN, établir un canal de travail de chaîne avant pour chaque FCWC_LN, un paquet devant quitter un noeud sur l'anneau étant acheminé vers un FCWC_LN correspondant et quittant l'anneau à partir du FCWC_LN correspondant ;
l'étape consistant à établir chaque canal de travail de chaîne avant comprenant :
déterminer (11) un noeud sur l'anneau comme le FCWC_LN ;
sur chaque noeud excepté le FCWC_LN sur l'anneau, configurer (12) une étiquette de chemin à commutation d'étiquettes de canal de travail, étiquette WC_LSP, utilisée pour envoyer un paquet au FCWC_LN dans une direction avant de l'anneau, l'étiquette WC_LSP configurée sur chaque noeud excepté le FCWC_LN étant attribuée par un noeud de bond suivant de chaque noeud excepté le FCWC_LN dans la direction avant de l'anneau à chaque noeud excepté le FCWC_LN ; et
dans une table d'acheminement d'étiquettes de chaque noeud excepté le FCWC_LN et un noeud de bond suivant du FCWC_LN dans la direction avant de l'anneau, configurer (13) une correspondance d'étiquettes WC_LSP, chaque noeud excepté le FCWC_LN et le noeud de bond suivant du FCWC_LN dans la direction avant de l'anneau étant un noeud intermédiaire du canal de travail de chaîne avant, et la correspondance d'étiquettes WC_LSP étant une correspondance entre une étiquette WC_LSP attribuée par un noeud de bond suivant de chaque noeud intermédiaire du canal de travail de chaîne avant dans la direction avant de l'anneau à chaque noeud intermédiaire du canal de travail de chaîne avant et une étiquette WC_LSP attribuée par chaque noeud intermédiaire du canal de travail de chaîne avant à un noeud de bond précédent de chaque noeud intermédiaire du canal de travail de chaîne avant dans la direction avant de l'anneau ;
en prenant chaque noeud sur l'anneau comme un noeud de sortie de canal de protection de chaîne inverse, RCPC_LN, établir un canal de protection de chaîne inverse pour chaque RCPC_LN,
l'étape consistant à établir chaque canal de protection de chaîne inverse comprenant :
déterminer (21) un noeud sur l'anneau comme le RCPC_LN ;
sur chaque noeud excepté le RCPC_LN sur l'anneau, configurer (22) une étiquette de chemin à commutation d'étiquettes de canal de protection, étiquette PC_LSP, utilisée pour envoyer un paquet au RCPC_LN dans une direction inverse de l'anneau, l'étiquette PC_LSP configurée sur chaque noeud excepté le RCPC_LN étant attribuée par un noeud de bond suivant de chaque noeud excepté le RCPC_LN dans la direction inverse de l'anneau à chaque noeud excepté le RCPC_LN ; et
dans une table d'acheminement d'étiquettes de chaque noeud excepté le RCPC_LN et un noeud de bond suivant du RCPC_LN dans la direction inverse de l'anneau, configurer (23) une correspondance d'étiquettes PC_LSP, un noeud excepté le RCPC_LN et le noeud de bond suivant du RCPC_LN dans la direction inverse de l'anneau étant un noeud intermédiaire du canal de protection de chaîne inverse, et la correspondance d'étiquettes PC_LSP étant une correspondance entre une étiquette PC_LSP attribuée par un noeud de bond suivant de chaque noeud intermédiaire du canal de protection de chaîne inverse dans la direction inverse de l'anneau à chaque noeud intermédiaire du canal de protection de chaîne inverse et une étiquette PC_LSP attribuée par chaque noeud intermédiaire du canal de protection de chaîne inverse à un noeud de bond précédent de chaque noeud intermédiaire du canal de protection de chaîne inverse dans la direction inverse de l'anneau ;
dans chaque noeud sur l'anneau, une correspondance d'étiquettes de commutation de canal est configurée, la correspondance d'étiquettes de commutation de canal étant une correspondance entre l'étiquette WC_LSP et l'étiquette PC_LSP, et un canal de travail de chaîne avant correspondant à une étiquette WC_LSP dans une correspondance d'étiquettes de commutation de canal ayant un même noeud de sortie qu'un canal de protection de chaîne inverse correspondant à une étiquette PC_LSP dans la même correspondance d'étiquettes de commutation de canal ;
le procédé comprenant en outre :
déterminer, par deux noeuds sur l'anneau, qu'une défaillance de liaison a lieu entre les deux noeuds, un des deux noeuds étant un noeud local d'une liaison défectueuse, et l'autre étant un noeud homologue de la liaison défectueuse ;
recevoir, par le noeud local de la liaison défectueuse et par l'intermédiaire d'un canal de travail de chaîne avant, un paquet à acheminer qui doit passer par la liaison défectueuse ;
déterminer, par le noeud local de la liaison défectueuse et selon une étiquette WC_LSP du paquet à acheminer et la correspondance d'étiquettes de commutation de canal, une étiquette PC_LSP pour le paquet à acheminer ; et
en utilisant l'étiquette PC_LSP déterminée et le long d'un canal de protection de chaîne inverse correspondant à l'étiquette PC_LSP déterminée, envoyer, par le noeud local de la liaison défectueuse, le paquet à acheminer à un noeud de sortie du paquet à acheminer.

2. Procédé selon la revendication 1, comprenant en outre :
déterminer, par un noeud sur l'anneau, un FCWC_LN d'un paquet d'entrée après avoir reçu le paquet d'entrée ;
déterminer une étiquette WC_LSP pour le paquet d'entrée selon le FCWC_LN du paquet d'entrée ; et
pousser l'étiquette WC_LSP déterminée dans le paquet d'entrée et exécuter un acheminement de paquet.

3. Procédé de configuration de réseau, appliqué dans un anneau comprenant n noeuds, dans lequel n est supérieur à 2 et n est un nombre naturel, comprenant :
en prenant chaque noeud sur l'anneau comme un noeud de sortie de canal de travail de chaîne avant, FCWC_LN, établir un canal de travail de chaîne avant pour chaque FCWC_LN, un paquet devant quitter un noeud sur l'anneau étant acheminé vers un FCWC_LN correspondant et quittant l'anneau à partir du FCWC_LN correspondant ;
l'étape consistant à établir chaque canal de travail de chaîne avant comprenant :
déterminer (11) un noeud sur l'anneau comme le FCWC_LN ;
sur chaque noeud excepté le FCWC_LN sur l'anneau, configurer (12) une étiquette de chemin à commutation d'étiquettes de canal de travail, étiquette WC_LSP, utilisée pour envoyer un paquet au FCWC_LN dans une direction avant de l'anneau, l'étiquette WC_LSP configurée sur chaque noeud excepté le FCWC_LN étant attribuée par un noeud de bond suivant de chaque noeud excepté le FCWC_LN dans la direction avant de l'anneau à chaque noeud excepté le FCWC_LN ; et
dans une table d'acheminement d'étiquettes de chaque noeud excepté le FCWC_LN et un noeud de bond suivant du FCWC_LN dans la direction avant de l'anneau, configurer (13) une correspondance d'étiquettes WC_LSP, chaque noeud excepté le FCWC_LN et le noeud de bond suivant du FCWC_LN dans la direction avant de l'anneau étant un noeud intermédiaire du canal de travail de chaîne avant, et la correspondance d'étiquettes WC_LSP étant une correspondance entre une étiquette WC_LSP attribuée par un noeud de bond suivant de chaque noeud intermédiaire du canal de travail de chaîne avant dans la direction avant de l'anneau à chaque noeud intermédiaire du canal de travail de chaîne avant et une étiquette WC_LSP attribuée par chaque noeud intermédiaire du canal de travail de chaîne avant à un noeud de bond précédent de chaque noeud intermédiaire du canal de travail de chaîne avant dans la direction avant de l'anneau ;
en prenant chaque noeud sur l'anneau comme un noeud de sortie de canal de protection d'anneau inverse, RRPC_LN, établir un canal de protection d'anneau inverse pour chaque RRPC_LN,
l'étape consistant à établir chaque canal de protection d'anneau inverse comprenant :
déterminer (31) un noeud sur l'anneau comme le RRPC_LN ;
sur chaque noeud sur l'anneau, configurer (32) une étiquette de chemin à commutation d'étiquettes de canal de protection, étiquette PC_LSP, utilisée pour envoyer un paquet au RRPC_LN dans une direction inverse de l'anneau, l'étiquette PC_LSP configurée sur chaque noeud de l'anneau étant attribuée par un noeud de bond suivant de chaque noeud sur l'anneau dans la direction inverse de l'anneau à chaque noeud sur l'anneau; et
dans une table d'acheminement d'étiquettes de chaque noeud sur l'anneau, configurer (33) une correspondance d'étiquettes PC_LSP, la correspondance d'étiquettes PC_LSP étant une correspondance entre une étiquette PC_LSP attribuée par le noeud de bond suivant de chaque noeud sur l'anneau dans la direction inverse de l'anneau à chaque noeud sur l'anneau et utilisée pour envoyer un paquet au RRPC_LN dans la direction inverse de l'anneau et une étiquette PC_LSP attribuée par chaque noeud sur l'anneau à un noeud de bond précédent de chaque noeud sur l'anneau dans la direction inverse de l'anneau et utilisée pour envoyer un paquet au RRPC_LN dans la direction inverse de l'anneau ;
dans chaque noeud sur l'anneau, une correspondance d'étiquettes de commutation de canal étant configurée, la correspondance d'étiquettes de commutation de canal étant une correspondance entre l'étiquette WC_LSP et l'étiquette PC_LSP, et un canal de travail de chaîne avant correspondant à une étiquette WC_LSP dans une correspondance d'étiquettes de commutation de canal ayant un même noeud de sortie qu'un canal de protection d'anneau inverse correspondant à une étiquette PC_LSP dans la même correspondance d'étiquettes de commutation de canal ;
le procédé comprenant en outre :
déterminer, par deux noeuds sur l'anneau, qu'une défaillance de liaison a lieu entre les deux noeuds, un des deux noeuds étant un noeud local d'une liaison défectueuse, et l'autre étant un noeud homologue de la liaison défectueuse ;
recevoir, par le noeud local de la liaison défectueuse et par l'intermédiaire d'un canal de travail de chaîne avant, un paquet à acheminer qui doit passer par la liaison défectueuse ;
déterminer, par le noeud local de la liaison défectueuse et selon une étiquette WC_LSP du paquet à acheminer et la correspondance d'étiquettes de commutation de canal dans le noeud local de la liaison défectueuse, une étiquette PC_LSP pour le paquet à acheminer ; et
en utilisant l'étiquette PC_LSP déterminée et le long d'un canal de protection d'anneau inverse correspondant à l'étiquette PC_LSP déterminée, envoyer, par le noeud local de la liaison défectueuse, le paquet à acheminer au noeud homologue de la liaison défectueuse ; et
déterminer, par le noeud homologue de la liaison défectueuse et selon l'étiquette PC_LSP dans le paquet à acheminer et une correspondance d'étiquettes de commutation de canal dans le noeud homologue de la liaison défectueuse, une étiquette WC_LSP pour le paquet à acheminer, et envoyer, le long du canal de travail de chaîne avant, le paquet à acheminer à un noeud de sortie du paquet à acheminer.

4. Procédé selon la revendication 3, comprenant en outre :
déterminer, par un noeud sur l'anneau, un FCWC_LN d'un paquet d'entrée après avoir reçu le paquet d'entrée ;
déterminer une étiquette WC_LSP pour le paquet d'entrée selon le FCWC_LN du paquet d'entrée ; et
pousser l'étiquette WC_LSP déterminée dans le paquet d'entrée et exécuter un acheminement de paquet.
